# EUROPÄISCHE PATENTSCHRIFT

(11) **EP 2 534 386 B1**
(45) Veröffentlichungstag und Bekanntmachung des Hinweises auf die Patenterteilung: **25.12.2019**
(21) Anmeldenummer: 11705160.7
(22) Anmeldetag: 11.02.2011
(51) Int. Cl.: F16B 33/00, F16B 41/00, H01Q 1/12, H01Q 1/32

(54) **BEFESTIGUNG EINES GERÄTES MIT HOCHFREQUENZ-EIGENSCHAFTEN WIE IMPEDANZWANDLER ODER VERSTÄRKER AN EINER FAHRZEUGKAROSSERIE**
ATTACHMENT OF EQUIPMENT WITH HIGH FREQUENCY CHARACTERISTICS SUCH AS IMPEDANCE CONVERTERS OR AMPLIFIERS AT A VEHICLE BODY
ATTACHEMENT D'ÉQUIPEMENT AVEC DES CARACTÉRISTIQUES À HAUTE FRÉQUENCE TELLES QUE DES CONVERTISSEURS D'IMPÉDANCE OU DES AMPLIFICATEURS À UN CORPS DE VÉHICULE

(30) Priorität: 12.02.2010 DE 102010007954
(43) Veröffentlichungstag der Anmeldung: 19.12.2012
(73) Patentinhaber: Hirschmann Car Communication GmbH, 72654 Neckartenzlingen (DE)
(72) Erfinder: SILVA, David, 72622 Nürtigen (DE)
(74) Vertreter: Greif, Thomas
(86) Internationale Anmeldenummer: PCT/EP2011/000652
(87) Internationale Veröffentlichungsnummer: WO 2011/098286

(56) Entgegenhaltungen:
- EP-A1- 2 390 515
- DE-A1-102006 009 660
- US-A1- 2005 237 248

## Beschreibung

Die Erfindung betrifft ein Gerät mit Hochfrequenz-Eigenschaften, insbesondere einen Impedanzwandler oder einen Verstärker, ein System mit einem solchen Gerät sowie ein Verfahren zur Befestigung eines solchen Gerätes gemäß den Merkmalen der unabhängigen Patentansprüche.

Ein Gerät mit Hochfrequenz-Eigenschaften, wie beispielsweise ein Impedanzwandler oder ein Verstärker, ist aus der DE 10 2010 019 383 A1 bekannt. Dieser Stand der Technik zeigt ein Gerät mit Hochfrequenz-Eigenschaften, aufweisend ein Gehäuse zur Aufnahme einer Leiterplatte mit darauf angeordneten elektronischen Bauteilen zu Realisierung der Funktion des Gerätes und mit zumindest einem Steckverbinder, wobei Befestigungsmittel vorgesehen sind, die dazu geeignet und ausgebildet sind, das Gerät an seinen bestimmungsgemäßen Einbauort zu befestigen, wobei die Befestigungsmittel als eine Schraube und ein damit zusammen wirkender Gegenhalter ausgebildet sind, wobei das Gehäuse einen Anschlag aufweist, der den Bewegungsbereich des Gegenhalters bei Betätigung der Schraube begrenzt. Solche Geräte kommen zur Anwendung in der Automobilindustrie und werden im Regelfall von Zulieferunternehmen der Automobilhersteller hergestellt, geprüft, verpackt und dann zum weiteren Einbau an den Automobilhersteller geliefert. Beim Einbau solcher Geräte am Montageband des Fahrzeugherstellers kommt es auf höchste Präzision und Schnelligkeit sowie Einfachheit und Reproduzierbarkeit der Einbaubedingungen an. Es muss sichergestellt werden, dass das einzubauende Gerät schnell und einfach an seinen bestimmungsgemäßen Einbauort gebracht, dort angeordnet und befestigt werden kann, ohne dass weitere, insbesondere überflüssige Handgriffe erforderlich sind.

Bei dem bekannten Gerät mit Hochfrequenz-Eigenschaften ist vorgesehen, dass z. B. ein Karosserieblech, welches den bestimmungsgemäßen Einbauort umfasst, eine Öffnung aufweist, wobei der Gegenhalter des Gerätes in Überdeckung mit der Öffnung gebracht und durch diese durchgeführt wird. Durch Betätigung der Schraube wird der Gegenhalter unterhalb des Karosseriebleches in Richtung des Anschlages bewegt, wobei er die Überdeckung mit der Öffnung in dem Karosserieblech verlässt und durch weitere Betätigung (Drehen) der Schraube gegen die Unterseite des Karosseriebleches gezogen wird und dort zur Anlage kommt, so dass dadurch das Gerät an seinem bestimmungsgemäßen Einbauort angeordnet, lagefixiert und schließlich befestigt wird.

Bei der Ausgestaltung des Gerätes, welches aus der DE 10 2010 019 383 A1 bekannt ist, mit seinem Gegenhalter und dem Anschlag an dem Gehäuse ist in der Praxis nicht gewährleistet, dass der Gegenhalter in einer definierten Position zu dem Gerät, insbesondere dessen Gehäuse ausgerichtet ist, so dass auch beim Einbau des Gerätes in das Fahrzeug keine definierte Ausrichtung des Gerätes in Bezug auf seinen Einbauort gegeben ist. Dadurch kann es passieren, dass es mittels umständlicher Handgriffe erforderlich ist, entweder das Gerät selber im Bereich seines Einbauortes so auszurichten, dass der Gegenhalter deckungsgleich mit der Öffnung ist oder dass das Gerät in seiner Sollposition in Bezug auf seinen Einbauort angeordnet wird und es vorher erforderlich ist, die Schraube zu betätigen, um den Gegenhalter in Überdeckung mit der Öffnung in dem Karosserieblech zu bringen. Dies ist deshalb erforderlich, da es während der Lagerung und vor allen Dingen während des Transportes des vorgefertigten Gerätes bis hin zu dem Fahrzeughersteller zu einer unerwünschten relativen Bewegung des Gegenhalters in Bezug auf das Gehäuse kommen kann. Das bedeutet, dass beim Fahrzeughersteller vor dem Einbau eines solchen Gerätes unter Umständen weitere Handgriffe erforderlich sind, um den Gegenhalter in seine gewünschte Sollposition sowohl in Bezug auf das Gehäuse des Gerätes als auch in Bezug auf die Öffnung in dem Karosserieblech des Fahrzeuges in seine Sollposition zu bringen. Außerdem besteht die Gefahr, dass nach der Herstellung, also während der Lagerung und während des Transportes, insbesondere aufgrund von Vibrationen sich der Gegenhalter von der Schraube, mit der er an dem Gehäuse festgelegt ist, löst, so dass wiederum entweder unnötige Handgriffe erforderlich sind, um den losgelösten Gegenhalter auf die Schraube aufzuschrauben oder aber im schlimmsten Falle der Gegenhalter und/oder die Schraube verloren geht, so dass das Gerät für die bestimmungsgemäße Montage nicht mehr brauchbar ist.

Der EP 2 390 515 A1 offenbart ein Gerät mit Hochfrequenz-Eigenschaften mit den Merkmalen des Oberbegriffs des Anspruchs 1.

Der Erfindung liegt daher die Aufgabe zugrunde, ein Gerät mit Hochfrequenz-Eigenschaften, ein System, umfassend ein solches Gerät, sowie ein Verfahren zur Montage eines solchen Gerätes anzugeben, wodurch die vorstehend geschilderten Nachteile beseitigt sind.

Diese Aufgabe wird durch die Merkmale der unabhängigen Patentansprüche gelöst.

Beispielweise ist zum einen vorgesehen, dass der Schraube eine Verliersicherung zugeordnet ist, die die Schraube in Bezug auf das Gehäuse festlegt und trotzdem eine Drehbewegung der Schraube während der Montage zulässt. Dadurch ist in vorteilhafter Weise sichergestellt, dass nach Herstellung des Gerätes, also nachdem der Gegenhalter mit der Schraube an dem Gehäuse des Gerätes festgelegt worden ist, die Schraube und folglich auch der Gegenhalter nicht mehr verloren gehen könne. Dabei bewirkt die Verliersicherung in konstruktiver und vorteilhafter Weise, dass mittels der Verliersicherung eine Kraft auf die Schraube ausgeübt wird, die diese gegen das Gehäuse drückt, wobei aber nach Aufbringung einer größeren Kraft als derjenigen der Verliersicherung die Schraube gedreht werden kann, um das Gerät an seinem bestimmungsgemäßen Einbauort festzulegen.

Weitere Ausgestaltungen der Verliersicherung werden in den Figuren erläutert.

Als Lösung der Aufgabe ist vorgesehen, dass der Anschlag und der damit zusammenwirkende Gegenhalter so ausgebildet sind, dass der Gegenhalter in einer ersten vorgegebenen Stellung in Bezug auf das Gehäuse ausgerichtet festgelegt ist und nach Anordnung des Gerätes an seinem bestimmungsgemäßen Einbauort in eine zweite vorgegebene Stellung (durch Betätigung der Schraube) gebracht wird. Durch diese spezielle Ausgestaltung dieses Anschlages als Verriegelungslasche wird der Gegenhalter nach Herstellung des Gerätes und seiner Montage mittels der Schraube in einer definierten Position zu dem Gehäuse des Gerätes ausgerichtet festgelegt, wobei mittels der Verriegelungslasche sichergestellt ist, dass sich der Gegenhalter, nachdem er diese Position eingenommen hat, nur unter Aufbringung vorgegebener Mindestkräfte herausbewegen lässt. Diese vorgegebenen Mindestkräfte sind aber so gewählt, dass sie während der Lagerung und des Transportes herausbewegen lässt. Diese vorgegebenen Mindestkräfte sind aber so gewählt, dass sie während der Lagerung des vormontierten Gerätes nicht auftauchen. Das bedeutet, dass für diese Zeit zwischen Vormontage des Gerätes und Einbau an seinem bestimmungsgemäßen Einbauort der Gegenhalter in einer definierten Lage zu dem Gehäuse des Gerätes ausgerichtet und festgelegt ist. Erst wenn das Gerät an seinem Einbauort angeordnet ist und festlegt werden soll, kann durch Betätigen der Schraube und Aufbringung der Mindestkräfte der Gegenhalter aus seiner definierten Vormontageposition heraus in seine Endmontageposition bewegt werden, wobei er nicht mehr in Überdeckung mit der Öffnung in dem Karosserieblech ist und somit in Teilbereichen zur Anlage an der Unterseite des Karosseriebleches kommt und folglich das Gerät an seinem bestimmungsgemäßen Einbauort befestigt wird.

Weitere Ausgestaltungen des Anschlages (in Form einer Verriegelungslasche) sind in den Unteransprüchen angegeben und werden ebenfalls im Zusammenhang mit den Figuren beschrieben.

Weiterhin ist erfindungsgemäß ein Verfahren zur Montage eines Gerätes mit Hochfrequenz-Eigenschaften an einem Karosserieblech eines Fahrzeuges angegeben, wobei vorgesehen ist, dass der Gegenhalter in einer ersten vorgegebenen Stellung in Bezug auf das Gehäuse ausgerichtet festgelegt wird und nach Anordnung des Gerätes an seinem bestimmungsgemäßen Einbauort der Gegenhalter in dieser ersten vorgegebenen Stellung durch eine Öffnung in dem Karosserieblech des Fahrzeugs durchgeführt wird und danach die Schraube betätigt wird, wobei der Gegenhalter unter Aufbringung vorgegebener Mindestkräfte aus der ersten vorgegebenen Stellung herausbewegt wird und zur Anlage an den Anschlag kommt, so dass er aus der Überdeckung mit der Öffnung des Karosseriebleches herausbewegt wird und durch Weiterdrehen der Schraube an der Unterseite des Karosseriebleches zur Anlage kommt, so dass er dort in Teilbereichen anliegt und damit das Gerät an seinem bestimmungsgemäßen Einbauort festgelegt ist.

Schließlich umfasst die erfindungsgemäße Lösung ein System, aufweisend ein weiter oben beschriebenes Gerät mit Hochfrequenz-Eigenschaften und ein Fahrzeugbauteil, insbesondere ein Karosserieblech, eines Fahrzeuges. Dadurch kann in vorteilhafter Weise, wie weiter oben schon beschrieben, ein solches Gerät, wie beispielsweise ein Impedanzwandler, ein Antennenverstärker oder dergleichen, einfach, schnell und ohne weitere Handgriffe an dem Karosserieblech des Fahrzeuges angeordnet und in seiner Lage befestigt werden, indem das Gerät mit dem vorbereiteten Gegenhalter mit diesem durch die Öffnung des Karosseriebleches durchgeführt und anschließend die Schraube betätigt wird, wodurch der Gegenhalter von seiner Vormontagestellung in seine Befestigungsstellung bewegt wird und durch weiteres Drehen der Schraube an der Unterseite des Karosseriebleches mit Teilbereichen zur Anlage kommt, wodurch das Gerät an dem Karosserieblech in seiner vorgegebenen Position befestigt wird.

Die weiteren Unteransprüche sowie die Gegenstände der unabhängigen Patentansprüche werden im Folgenden näher beschrieben und unter Bezugnahme auf die Figuren weiter erläutert.

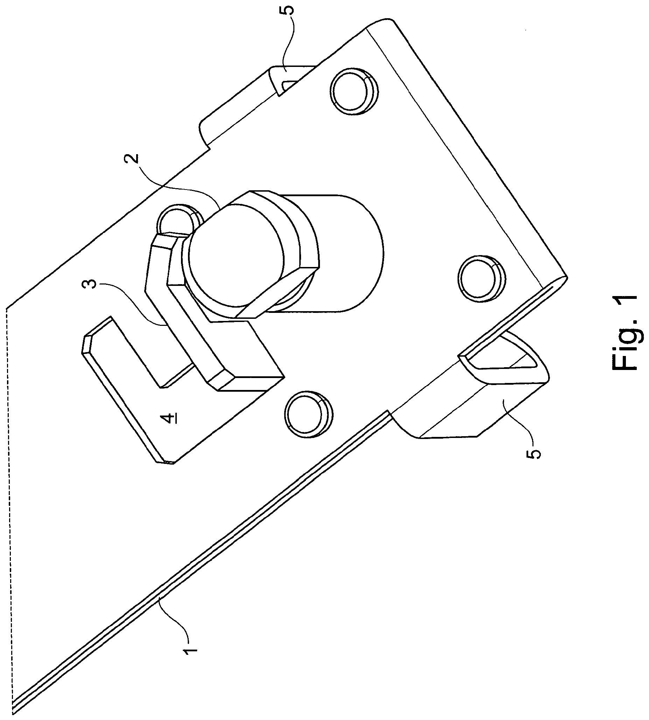

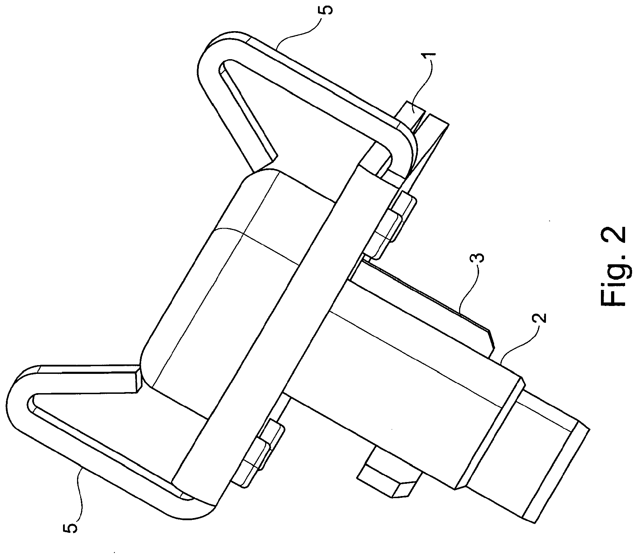

Figur 1 zeigt, soweit im Einzelnen dargestellt, einen Teilbereich eines Gehäuses 1 eines Gerätes mit Hochfrequenz-Eigenschaften. Das Gerät kann beispielsweise ausgebildet sein wie das Gerät, welches in den Figuren 1 und 2 nebst zugehöriger Beschreibung der DE 10 2010 019 383 A1 gezeigt und beschrieben ist. In diesem Bereich des Gehäuses 1, der insbesondere als abstehender flacher Bereich gestaltet ist, ist eine Öffnung vorhanden, durch welche eine Schraube 2 geführt ist. Ebenfalls ist abstehend von dem Gehäuse 1 ein Anschlag 3 vorgesehen, der in diesem Fall als einstückiger Bestandteil von dem Gehäuse 1 gebildet ist, indem er in einem Stanzbiegeverfahren aus dem Gehäuse 1 ausgestanzt ist, wodurch eine Ausschnitt 4 entsteht. Nach dem Ausstanzen ist der Anschlag 3 in Form der gezeigten Verliersicherung abgewinkelt worden. Weiterhin ist entweder als einstückiger Bestandteil des Gehäuses 1 oder als separater Bestandteil an dem Gehäuse 1 angeordnet eine Verliersicherung 5, die auf die Schraube 2 wirkt, und zwar derart, dass die Schraube 2 in Bezug auf das Gehäuse 1 zwar festgelegt ist und nur noch unter Aufbringung von Mindestkräften, die sich während der Lagerung des Transportes des Gerätes nicht einstellen, drehbewegt werden kann. Diese Kräfte können jedoch mit einem geeigneten Werkzeug (z. B. Schraubendreher oder Elektro-Schrauber) ohne weiteres und ohne jegliche Kraftanstrengung für den Montagearbeiter aufgebracht werden.

Figur 2 zeigt die gleichen Elementen, wie sie in Figur 1 dargestellt worden sind, lediglich in einer anderen perspektivischen Ansicht, wobei erkennbar ist, dass die Verliersicherung 5 zweiteilig ausgebildet ist und auf die Schraube 2, insbesondere deren Schraubenkopf, wirkt. Aufgrund der in Figur 2 gezeigten konstruktiven Ausgestaltung der Verliersicherung 5 wird auf die Schraube 2 eine Federkraft aufgebracht, die bewirkt, dass die Schraube 2 fest an dem Gehäuse 1 anliegt, jedoch unter Aufbringung von Mindestkräften, die durch die Verliersicherung 5 eingestellt werden können, gedreht werden kann.

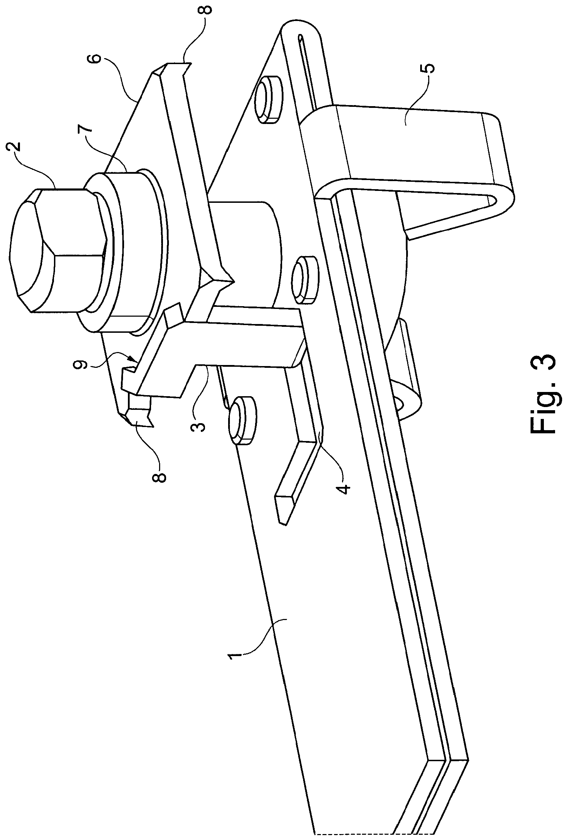

In Figur 3 ist erkennbar, dass nach Festlegung der Schraube 2 an dem Gehäuse 1 und Sicherung mittels der Verliersicherung 5 ein Gegenhalter, hier ein Gegenhalter 6 mit etwa quadratischem Querschnitt, auf die Schraube 2 aufgeschraubt worden ist. Hierzu weist der Gegenhalter 6 einen Gewindering 7 auf, der ein Innengewinde umfasst, welches dem Außengewinde der Schraube 2 entspricht. Alternativ hierzu ist es auch denkbar, den Gegenhalter 6 dicker und ohne Gewindering 7 auszugestalten, wobei dann in den dickeren Gegenhalter 6 ein Loch gebohrt und ein Gewinde geschnitten wird. Zwecks Steigerung der Haltekräfte des montierten Gerätes durch den Gegenhalter 6 weist dieser vorzugsweise an allen vier Ecken jeweils einen Dorn 8 auf, der sich in die Unterseite des bisher noch nicht dargestellten Karosseriebleches verkrallt und zum einen dadurch die Haltekräfte erhöht und zum anderen, falls erforderlich, eine Masseverbindung herstellt. Außerdem ist der Gegenhalter 6 mit einem Ausschnitt 9 versehen, wobei der in Form der Verriegelungslasche gebogene bzw. geformte Anschlag 3 eingreift. Durch das Zusammenwirken des speziell geformten Ausschnittes 9 und dem korrespondierend geformten Anschlag 3 in Form einer Verriegelungslasche ist sichergestellt, dass in der Position, in der sich der Gegenhalter 6 wie in Figur 3 befindet, der Gegenhalter 6 in einer ersten vorgegebenen Stellung in Bezug auf das Gehäuse 1 ausgerichtet festgelegt ist. Durch diese konstruktive Ausgestaltung ist gewährleistet, dass zum einen die Schraube 2 nicht mehr verloren und während der Lagerhalterung und des Transportes nicht mehr bewegt werden kann und/oder der Gegenhalter ebenfalls während der Lagerhalterung bzw. des Transportes immer diese eine Stellung einnimmt. Damit ist das derart vormontierte Gerät optimal auf den Einbau im Fahrzeug vorbereitet. In Figur 3 ist schließlich unterhalb der Dorne 8 noch erkennbar, dass aus der Oberfläche des Gehäuses 1 kreisrunde Vorsprünge abstehen, die nach der Montage des Gerätes an seinem bestimmungsgemäßen Einbauort mit den Dornen 8 zusammenwirken und eine leichte Verformung des dazwischen liegenden Karosseriebleches bewirken, um die Befestigungskräfte weiter zu erhöhen, damit vermieden wird, dass sich das Gerät im Betrieb des Fahrzeuges aus seiner Sollposition heraus bewegt.

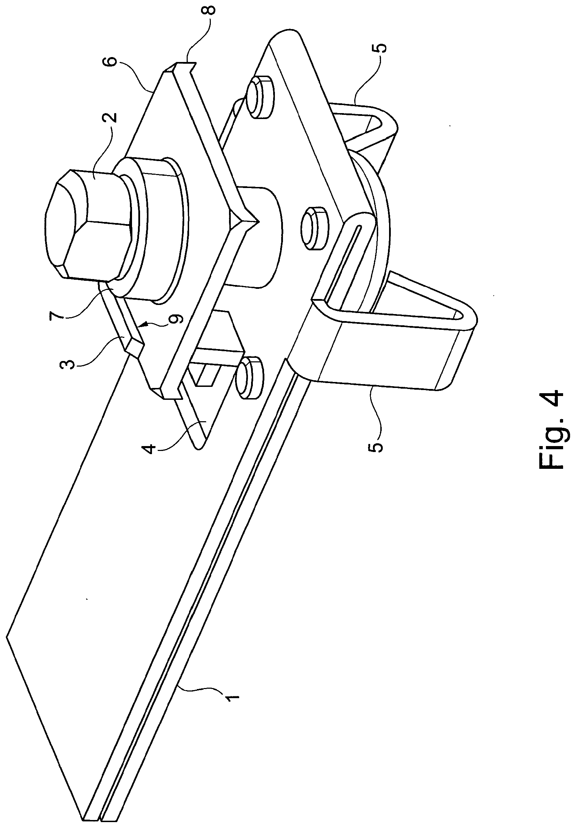

Figur 4 zeigt die gleiche Vormontagesituation, wie sie in Figur 3 dargestellt ist, aus einer anderen Perspektive.

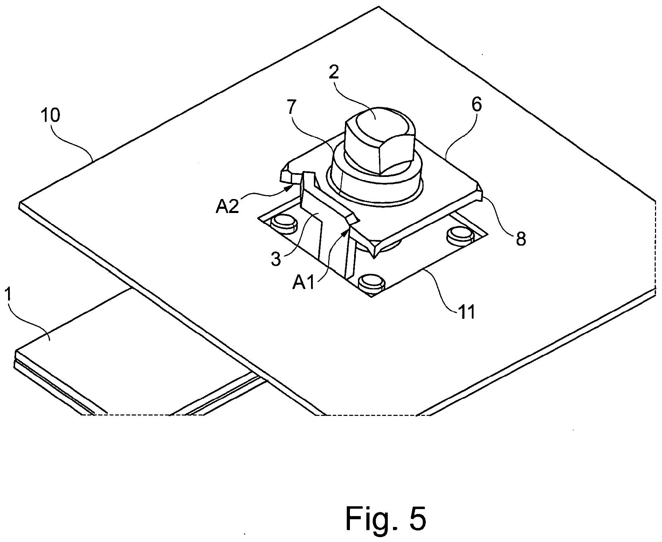

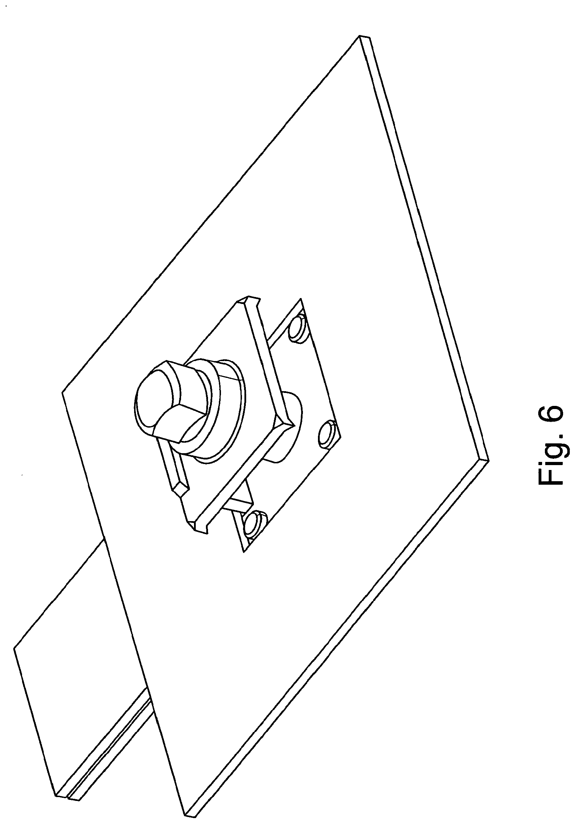

Die Figuren 5 und 6 zeigen das vormontierte Gerät mit dem entsprechend ausgerichteten Gegenhalter 6, nachdem dieser zwecks Montage auf einem Karosserieblech 10 durch eine Karosserieöffnung 11 in dem Karosserieblech 10 durchgeführt worden ist. Bis hierhin ist lediglich das vormontierte Gerät durch die Karosserieöffnung 11 bestimmungsgemäß durchgeführt worden, wobei hier sehr deutlich erkennbar ist, dass die Außenmaße des Gegenhalters 6 nur geringfügig kleiner sind als die Karosserieöffnung 11, damit der Gegenhalter 6 ohne Probleme durch Karosserieöffnung 11 durchgeführt werden kann. Hierbei ist auch erkennbar, dass die von der Oberfläche des Gehäuses 1 abstehenden Noppen in diesem Fall als Anschläge zur Vorpositionierung des Gehäuses 1 an dem Karosserieblech 10 innerhalb der Karosserieöffnung 11 dienen. Diese Noppen bewirken also in vorteilhafter Weise insbesondere dann eine Art Vorfixierung, wenn das Gerät von oben mit dem Gegenhalter 6 durch die Karosserieöffnung 11 durchgeführt wurde und der Monteur aufgrund des durchgehenden Karosseriebleches 10 die Sollposition des Gerätes in Bezug auf seinen bestimmungsgemäßen Einbauort von oben nicht mehr erkennen kann. Außerdem bewirken diese Noppen, dass mit Betätigung der Schraube 2 das Gerät, insbesondere dessen Gehäuse 1, sich nicht mehr in Bezug auf das Karosserieblech 10 bewegen kann. Insofern sind diese von dem Gehäuse 1 abstehenden Noppen wichtig für die Konstruktion, die Lagefixierung und die Montage des Gerätes.

In Figur 5 ist noch dargestellt, dass der Ausschnitt 9 in dem Gegenhalter 6 Anschläge A 1 und A 2 bildet, an denen der Anschlag 3 in dieser Vormontageposition zur Anlage kommt. Dadurch wird in vorteilhafter Weise bewirkt, dass der Gegenhalter 6 lagefixiert, aber aus dieser Lage heraus bewegbar relativ zu dem Gehäuse 1 angeordnet ist.

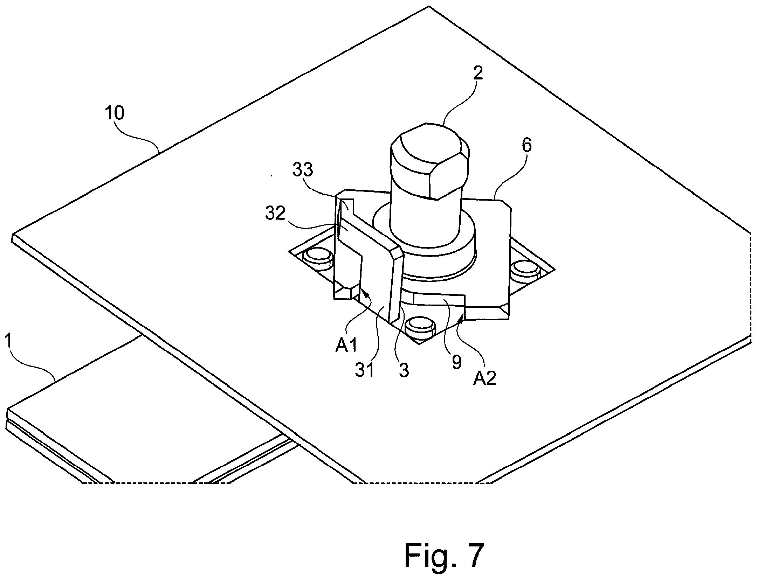

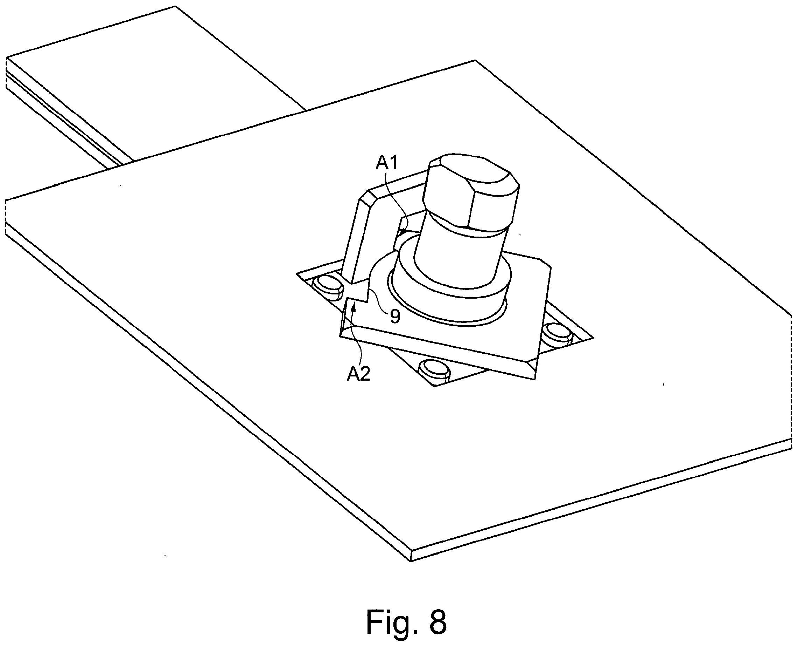

In den Figuren 7 und 8 ist die Endmontageposition dargestellt, wobei erkennbar ist, dass durch Drehung der Schraube 2 der Gegenhalter 6 aus seiner Vormontageposition (erste vorgegebene Stellung) in seine Befestigungsposition (zweite vorgegebene Stellung) gebracht worden ist. Dies ist dadurch möglich geworden, dass durch Drehen der Schraube zwei der Gegenhalter 6 in Richtung der Unterseite des Karosseriebleches 10 zunächst axial bewegt worden ist und dann, nachdem der Anschlag 3 nicht mehr im Bereich des Ausschnittes 9 zur Anlage kam, verdreht worden ist. Der Gegenhalter 6 konnte diese Verdrehung aber nicht beliebig mitmachen, weil der Anschlag 3, genauer dessen Längsschenkel 31, der aus dem Gehäuse 1 herausragt, an dem Anschlag A 2 zur Anlage kam und somit verhindert wird, dass der Gegenhalter 6 eine weitere Drehbewegung bei weiterer Drehung der Schraube 2 mitmacht. Das bedeutet, dass der Längsschenkel 31 des Anschlages 3 bewirkt, dass der Gegenhalter 6 in seiner Endmontageposition festgelegt wird und es nur noch möglich ist, ihn mittels der Schraube 2 weiter in Richtung der Unterseite des Karosseriebleches 10 zu bewegen, während der Querschenkel 32 und die sich an diesen Querschenkel 32 anschließende Abwinklung 33 bewirkt, dass sie in der ersten vorgegebenen Stellung in dem Ausschnitt 9 zwischen den Anschlägen A 1 und A 2 zur Anlage kommen und damit sichergestellt ist, dass der Gegenhalter 6 in dieser ersten vorgegebenen Stellung sowohl während der Lagerhalterung als auch während des Transportes verbleibt.

Der beschriebene Montagevorgang ist selbstverständlich auch reversibel, d. h. durch Drehung der Schraube 2 in die umgekehrte Richtung ist es möglich, dass der Gegenhalter 6 mit seinem Anschlag A 1 an dem Längsschenkel 31 zur Anlage kommt und durch Weiterdrehung der Schraube 2 der Gegenhalter 6 von der Unterseite des Karosseriebleches 10 abheben kann. Durch weitere Drehung der Schraube 2 wird dann der Zustand erreicht, wie er in den Figuren 5 und 6 gezeigt ist, so dass das Gerät beispielsweise zum Austausch von dem Karosserieblech 10 ohne weiteres entfernt werden kann, indem der Gegenhalter 6 durch die Karosserieöffnung 11 herausgezogen wird.

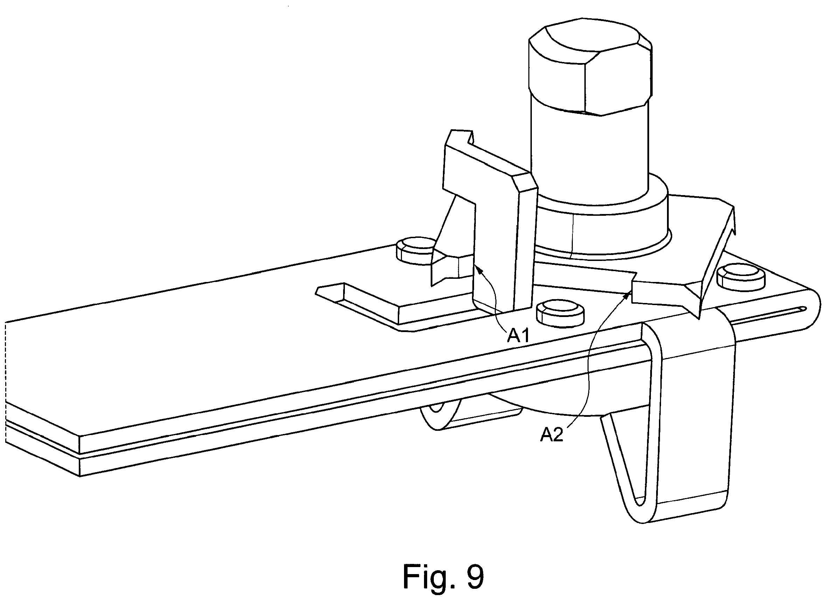

Figur 9 zeigt noch einmal die Situation des endmontierten Gegenhalters 6, hier allerdings ohne dargestelltes zwischenliegendes Karosserieblech 10.

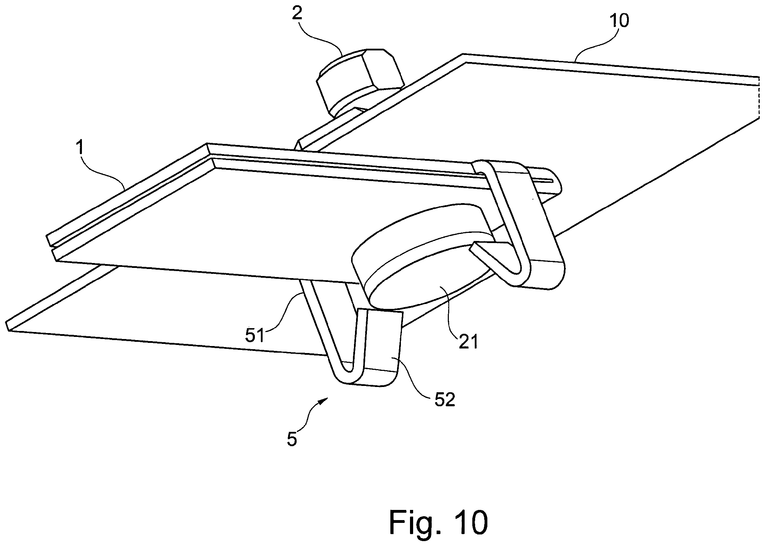

In Figur 10 sind die Details der Verliersicherung 5 gezeigt, nachdem das Gerät an seinem bestimmungsgemäßen Einbauort angeordnet und befestigt worden ist. Hier ist erkennbar, dass die Schraube 2 einen Schraubenkopf 21 aufweist, wobei auf den Schraubenkopf 21 die Verliersicherung 5 wirkt, die aus einer von dem Gehäuse 1 abstehenden Lasche 51 und einer sich daran anschließenden Abwinklung 52 gebildet ist. Diese beiden Laschen 51 und Abwinklungen 52 sind einander gegenüberliegend angeordnet, so dass sie zum einen einfach hergestellt werden können, indem sie in einem Stanzbiegeverfahren von dem Gehäuse 1 gebildet werden, und zum anderen die erforderliche Kraft auf den Schraubenkopf 21 der Schraube 2 aufbringen können. Alternativ dazu ist es denkbar, dass die Verliersicherung 5 mehr als zwei solcher Laschen 51 mit Abwinklungen 52 aufweist oder dass die Verliersicherung 5 als separates, eigenständiges Bauteil zu dem Gehäuse 1 ausgebildet und an diesem befestigt wird.

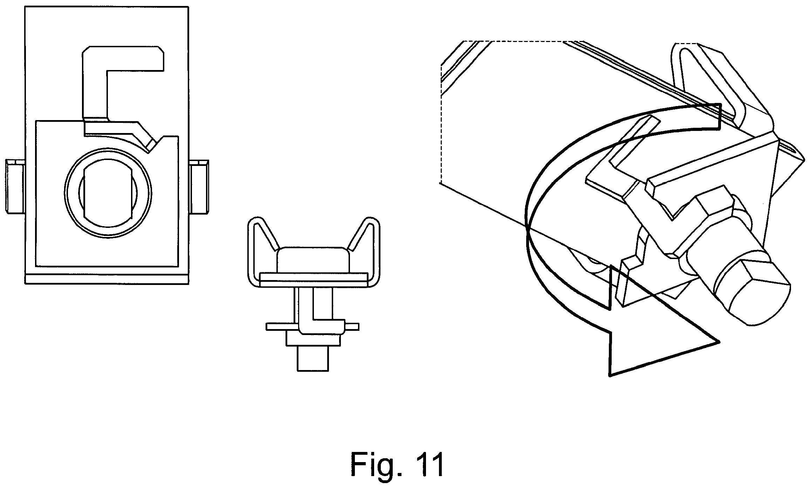

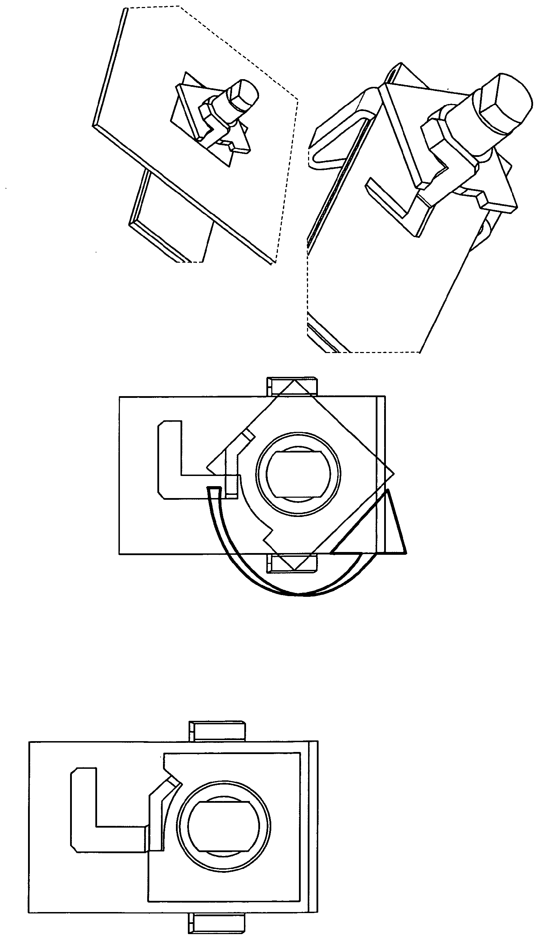

In den Figuren 11 und 12 sind schließlich in perspektivischer Darstellung noch einmal die verschiedenen Schritte und konstruktiven Ausgestaltungen des erfindungsgemäßen Gerätes, wie sie schon vorstehend beschrieben worden sind, gezeigt. So ist insbesondere in der jeweiligen linken Darstellung der Figuren 11 und 12 der sogenannte Anlieferzustand gezeigt, indem der Gegenhalter 6 in seiner ersten vorgegebenen Stellung in Bezug auf das Gehäuse 1 (hier "Verriegelung offen" genannt) gezeigt ist. In den jeweils rechten Darstellungen der Figuren 11 und 12 ist erkennbar, dass der Gegenhalter 6 aus dieser ersten vorgegebenen Stellung durch Drehung der Schraube 2 in die zweite vorgegebene Stellung gebracht worden ist, die hier als "verriegelt" bezeichnet worden ist.

### Bezugszeichenliste:

1. Gehäuse
2. Schraube
21. Schraubenkopf
3. Anschlag
31. Längsschenkel
32. Querschenkel
33. Abwinklung
4. Ausschnitt
5. Verliersicherung
51. Lasche
52. Abwinklung
6. Gegenhalter
7. Gewindering
8. Dorn
9. Ausschnitt
10. Karosserieblech
11. Karosserieöffnung

## Patentansprüche

1. Gerät mit Hochfrequenz-Eigenschaften, aufweisend ein Gehäuse (1) zur Aufnahme einer Leiterplatte mit darauf angeordneten elektronischen Bauteilen zur Realisierung der Funktion des Gerätes, wobei Befestigungsmittel vorgesehen sind, die dazu geeignet und ausgebildet sind, das Gerät an seinen bestimmungsgemäßen Einbauort zu befestigen, wobei die Befestigungsmittel als eine Schraube (2) und ein damit zusammenwirkender Gegenhalter (6) ausgebildet sind, wobei das Gehäuse (1) in einen Anschlag (3) aufweist, der den Bewegungsbereich des Gegenhalters (6) bei Betätigung der Schraube (2) begrenzt, **dadurch gekennzeichnet, dass d**er Anschlag (3) und der damit zusammenwirkende Gegenhalter (6) so ausgebildet sind, dass der Gegenhalter (6) in einer ersten vorgegebenen Stellung in Bezug auf das Gehäuse (1) ausgerichtet festgelegt ist und nach Anordnung des Gerätes an seinem bestimmungsgemäßen Einbauort in eine zweite vorgegebene Stellung gebracht wird, wobei der Anschlag (3) einen von einer Seite des Gehäuses (1) abstehenden Längsschenkel (31) und einen davon ausgehenden Querschenkel (32) aufweist, an dessen Ende eine Abwinklung (33) angeordnet ist.

2. Gerät nach Anspruch 1 **dadurch gekennzeichnet, dass** der Gegenhalter (6) an seinem Außenumfang einen mit dem Anschlag (3) zusammenwirkenden Ausschnitt (9) aufweist, der zwei Anschläge (A1, A2) umfasst, die bewirken, dass der Gegenhalter (6) in den zwei vorgegebenen Stellungen, insbesondere reversibel, festlegbar ist.

3. Gerät nach einem der Ansprüche 1 oder 2 **dadurch gekennzeichnet, dass** der Anschlag (3) ein einstückiger Bestandteil des Gehäuses (1) ist oder als separates Bauteil an dem Gehäuse (1) angeordnet ist.

4. System, umfassend ein Fahrzeugbauteil eines Fahrzeuges sowie ein an dem Fahrzeugbauteil zu montierendes Gerät nach einem der Ansprüche 1 bis 3 mit Hochfrequenz-Eigenschaften, aufweisend ein Gehäuse (1) zur Aufnahme einer Leiterplatte mit darauf angeordneten elektronischen Bauteilen zur Realisierung der Funktion des Gerätes, wobei Befestigungsmittel vorgesehen sind, die dazu geeignet und ausgebildet sind, das Gerät an seinen bestimmungsgemäßen Einbauort zu befestigen, wobei die Befestigungsmittel als eine Schraube (2) und ein damit zusammenwirkender Gegenhalter (6) ausgebildet sind, wobei das Gehäuse (1) in einen Anschlag (3) aufweist, der den Bewegungsbereich des Gegenhalters (6) bei Betätigung der Schraube (2) begrenzt, **dadurch gekennzeichnet, dass d**er Anschlag (3) und der damit zusammenwirkende Gegenhalter (6) so ausgebildet sind, dass der Gegenhalter (6) in einer ersten vorgegebenen Stellung in Bezug auf das Gehäuse (1) ausgerichtet festgelegt ist und nach Anordnung des Gerätes an seinem bestimmungsgemäßen Einbauort in eine zweite vorgegebene Stellung gebracht wird.

5. Verfahren zur Montage eines Gerätes nach einem der Ansprüche 1 bis 3 mit Hochfrequenz-Eigenschaften an einem Fahrzeugbauteil, insbesondere an einem Karosserieblech, eines Fahrzeuges, wobei ein Gegenhalter in einer ersten vorgegebenen Stellung in Bezug auf ein Gehäuse des Gerätes ausgerichtet festgelegt wird und nach Anordnung des Gerätes an seinem bestimmungsgemäßen Einbauort der Gegenhalter in dieser ersten vorgegebenen Stellung durch eine Öffnung in dem Fahrzeugbauteil des Fahrzeugs durchgeführt wird und danach eine Schraube betätigt wird, wobei der Gegenhalter unter Aufbringung vorgegebener Mindestkräfte aus der ersten vorgegebenen Stellung herausbewegt wird und zur Anlage an einen Anschlag kommt, so dass er aus der Überdeckung mit der Öffnung des Fahrzeugbauteiles herausbewegt wird und durch Weiterdrehen der Schraube an der Unterseite des Fahrzeugbauteiles zur Anlage kommt, so dass er dort in Teilbereichen anliegt und damit das Gerät an seinem bestimmungsgemäßen Einbauort festgelegt ist.

## Claims

1. Device with high-frequency properties, having a housing (1) for accommodating a printed circuit board with electronic components arranged on it for implementing the function of the device, wherein fastening means are provided which are suitable and designed for fastening the device in its intended installation location, wherein the fastening means are designed as a screw (2) and a mating holder (6) which interacts with it, wherein the housing (1) has in a stop (3) which limits the movement range of the mating holder (6) when the screw (2) is operated, **characterized in that** the stop (3) and the mating holder (6) which interacts with it are designed such that the mating holder (6) is secured in a manner oriented in a first prespecified position with respect to the housing (1) and is moved to a second prespecified position after the device is arranged in its intended installation location, wherein the stop (3) has a longitudinal limb (31) which projects from one side of the housing (1) and a transverse limb (32) which extends from said longitudinal limb and at the end of which an angled portion (33) is arranged.

2. Device according to Claim 1, **characterized in that** the mating holder (6) has, on its outer circumference, a cutout (9) which interacts with the stop (3) and comprises two stops (A1, A2) which have the effect that the mating holder (6) can be, in particular reversibly, secured in the two prespecified positions.

3. Device according to either of Claims 1 and 2, **characterized in that** the stop (3) is an integral constituent part of the housing (1) or is arranged on the housing (1) as a separate component.

4. System comprising a vehicle component of a vehicle and also a device according to one of Claims 1 to 3 with high-frequency properties which is to be mounted on the vehicle component, having a housing (1) for accommodating a printed circuit board with electronic components arranged on it for implementing the function of the device, wherein fastening means are provided which are suitable and designed for fastening the device in its intended installation location, wherein the fastening means are designed as a screw (2) and a mating holder (6) which interacts with it, wherein the housing (1) has in a stop (3) which limits the movement range of the mating holder (6) when the screw (2) is operated, **characterized in that** the stop (3) and the mating holder (6) which interacts with it are designed such that the mating holder (6) is secured in a manner oriented in a first prespecified position with respect to the housing (1) and is moved to a second prespecified position after the device is arranged in its intended installation location.

5. Method for mounting a device according to one of Claims 1 to 3 with high-frequency properties on a vehicle component, in particular on a bodywork panel, of a vehicle, wherein a mating holder is secured in a manner oriented in a first prespecified position with respect to a housing of the device and, after the device is arranged in its intended installation location, the mating holder is passed through an opening in the vehicle component of the vehicle in this first prespecified position and a screw is then operated, wherein the mating holder is moved out of the first prespecified position with the application of prespecified minimum forces and comes to rest against a stop, so that the said mating holder is moved out of overlap with the opening of the vehicle component and comes to rest against the bottom side of the vehicle component by further rotation of the screw, so that the said mating holder rests in subregions there and therefore the device is secured in its intended installation location.

## Revendications

1. Appareil avec des propriétés à haute fréquence, présentant un boîtier (1) destiné à contenir une carte de circuits imprimés avec des composants électroniques disposés sur celle-ci pour la réalisation de la fonction de l'appareil, dans lequel il est prévu des moyens de fixation, qui sont appropriés et configurés pour fixer l'appareil à son emplacement de montage prévu, dans lequel les moyens de fixation sont réalisés sous la forme d'une vis (2) et d'une plaquette de maintien (6) coopérant avec celle-ci, dans lequel le boîtier (1) présente dans une butée (3), qui limite la zone de mouvement de la plaquette de maintien (6) lors de l'actionnement de la vis (2), **caractérisé en ce que** la butée (3) et la plaquette de maintien (6) coopérant avec elle sont réalisées de telle manière que la plaquette de maintien (6) soit fixée dans une première position prédéterminée en alignement par rapport au boîtier (1) et qu'après agencement de l'appareil à son emplacement de montage prévu elle soit amenée dans une deuxième position prédéterminée, dans lequel la butée (3) présente une branche longitudinale (31) partant d'un côté du boîtier (1) et une branche transversale (32) partant de celle-ci, à l'extrémité de laquelle est disposée une partie coudée (33).

2. Appareil selon la revendication 1, **caractérisé en ce que** la plaquette de maintien (6) présente à sa périphérie extérieure une découpe (9) coopérant avec la butée (3), qui comprend deux butées (A1, A2), qui entraînent que la plaquette de maintien (6) peut être fixée dans les deux positions prédéterminées, en particulier de manière réversible.

3. Appareil selon une des revendications 1 ou 2, **caractérisé en ce que** la butée (3) est un composant d'une seule pièce du boîtier (1) ou est disposée sous forme de composant séparé sur le boîtier (1).

4. Système, comprenant un composant de véhicule d'un véhicule ainsi qu'un appareil avec des propriétés à haute fréquence selon l'une quelconque des revendications 1 à 3 à monter sur le composant de véhicule, présentant un boîtier (1) destiné à contenir une carte de circuits imprimés avec des composants électroniques disposés sur celle-ci pour la réalisation de la fonction de l'appareil, dans lequel il est prévu des moyens de fixation, qui sont appropriés et configurés pour fixer l'appareil à son emplacement de montage prévu, dans lequel les moyens de fixation sont réalisés sous la forme d'une vis (2) et d'une plaquette de maintien (6) coopérant avec celle-ci, dans lequel le boîtier (1) présente dans une butée (3), qui limite la zone de mouvement de la plaquette de maintien (6) lors de l'actionnement de la vis (2), **caractérisé en ce que** la butée (3) et la plaquette de maintien (6) coopérant avec elle sont réalisées de telle manière que la plaquette de maintien (6) soit fixée dans une première position prédéterminée en alignement par rapport au boîtier (1) et qu'après agencement de l'appareil à son emplacement de montage prévu elle soit amenée dans une deuxième position prédéterminée.

5. Procédé de montage d'un appareil avec des propriétés à haute fréquence selon l'une quelconque des revendications 1 à 3 sur un composant de véhicule, en particulier sur une tôle de carrosserie, d'un véhicule, dans lequel on fixe une plaquette de maintien dans une première position prédéterminée en alignement par rapport à un boîtier de l'appareil et après agencement de l'appareil à son emplacement de montage prévu on conduit la plaquette de maintien dans cette première position prédéterminée à travers une ouverture dans le composant de véhicule du véhicule et on actionne ensuite une vis, dans lequel on déplace la plaquette de maintien hors de la première position prédéterminée en appliquant des forces minimales prédéterminées et on l'amène en appui sur une butée, de telle manière qu'elle soit déplacée de la position de recouvrement avec l'ouverture du composant de véhicule et en faisant encore tourner la vis on l'amène en appui sur le côté inférieur du composant de véhicule, de telle manière qu'elle s'y applique dans des régions partielles et que l'appareil soit ainsi fixé à son emplacement de montage prévu.
